# EUROPÄISCHE PATENTSCHRIFT

(11) **EP 0 716 898 B1**
(45) Veröffentlichungstag und Bekanntmachung des Hinweises auf die Patenterteilung: **11.08.1999**
(21) Anmeldenummer: 94119921.8
(22) Anmeldetag: 16.12.1994
(51) Int. Cl.: B23D 49/16

(54) **Vorrichtung zur schwenkbaren Befestigung eines Sägetisches an einer Stichsäge**
Saber saw with angularly adjustable guide plate
Scie sauteuse avec plaque de base inclinable

(43) Veröffentlichungstag der Anmeldung: 19.06.1996
(73) Patentinhaber: CEKA ELEKTROWERKZEUGE AG + Co.KG, CH-9630 Wattwil (CH)
(72) Erfinder: Dürr, Paul, CH-9631 Ulisbach (CH); Breitenmoser, Armin, CH-9631 Ulisbach (CH)
(74) Vertreter: Otte, Peter, Dipl.-Ing.

(56) Entgegenhaltungen:
- EP-A- 0 603 552
- US-A- 3 087 519
- US-A- 3 146 809
- US-A- 3 846 912
- US-A- 4 730 397

## Beschreibung

Die Erfindung betrifft eine Vorrichtung zur schwenkbaren Befestigung eines Sägetisches an einer Stichsäge nach dem Oberbegriff des Patentanspruchs 1; siehe US-A-4730397.

Seit längerem sind Stichsägen, insbesondere für den Heimwerkergebrauch, bekannt, bei denen - beispielsweise um Gehrungsschnitte auszuführen - der Sägetisch schwenkbar an der Stichsäge befestigt ist. Um den Sägetisch zu verschwenken - z.B. in eine um 45° zur Sägerichtung geneigte Position -, müssen bei bekannten Stichsägetischbefestigungen Werkzeuge zu Hilfe genommen werden, um den Stichsägetisch zunächst zu lösen, zu verschwenken und danach wieder zu befestigen. Diese Art der Verschwenkung des Stichsägetisches ist aufwendig und kann ohne das erforderliche Werkzeug nicht ausgeführt werden. Darüber hinaus besteht bei nicht ordnungsgemäß befestigtem Stichsägetisch die Gefahr, daß der Sägetisch aus der gewünschten geneigten Position beim Sägevorgang verstellt wird.

Es ist deshalb Aufgabe der Erfindung, die genannten Nachteile zu beseitigen und eine Vorrichtung zur schwenkbaren Befestigung eines Sägetisches an einer Stichsäge so zu verbessern, daß ein Verschwenken des Sägetisches an der Stichsäge ohne die Zuhilfenahme von Werkzeug ermöglicht und daß darüber hinaus eine verstellsichere exakt positionierbare Befestigung des Sägetisches an der Stichsäge ermöglicht wird.

Die Aufgabe wird bei einer Vorrichtung zur schwenkbaren Befestigung eines Sägetisches an einer Stichsäge mit den Merkmalen des Oberbegriffs des Patentanspruchs 1 erfindungsgemäß durch die Merkmale des Kennzeichnungsteils des Patentanspruchs 1 gelöst.

Vorteilhafte Ausführungsformen der Erfindung sind Gegenstand der Unteransprüche.

Die nachfolgende Beschreibung der Erfindung dient im Zusammenhang mit beiliegender Zeichnung der näheren Erläuterung.

Es zeigen:
- Fig. 1: eine teilweise geschnittene Seitenansicht einer Stichsäge mit einer Vorrichtung zur schwenkbaren Befestigung eines Sägetisches;
- Fig. 2: eine Draufsicht auf ein erstes Befestigungsteil einer Vorrichtung zur schwenkbaren Befestigung eines Sägetisches und
- Fig. 3: eine entlang der Linie III-III der Fig. 2 geschnittene Darstellung des ersten Befestigungsteils.

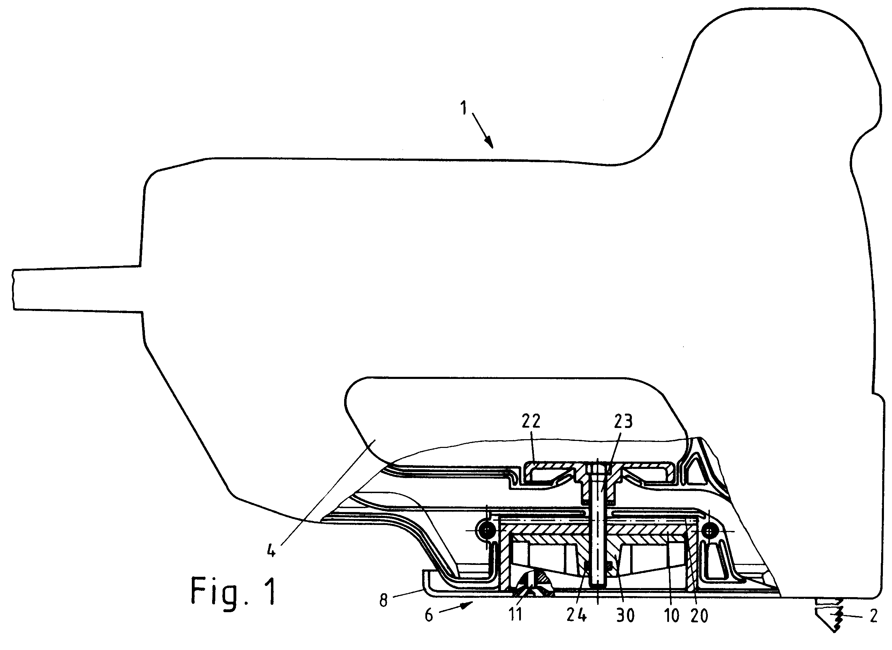

Fig. 1 zeigt eine teilweise geschnittene Seitenansicht einer elektrischen Handstichsäge. Die Stichsäge umfaßt ein Stichsägengehäuse 1, in welchem ein - nicht dargestellter - Antrieb zur Erzeugung einer an sich bekannten Pendelhubbewegung eines Stichsägeblattes 2 angeordnet ist.

Im unteren Teil des Stichsägengehäuses 1 befindet sich unterhalb einer Grifföffnung 4 eine Vorrichtung 6 zur schwenkbaren Befestigung eines Sägetisches 8. Die Vorrichtung 6 umfaßt ein erstes Befestigungsteil 10, an welchem beispielsweise durch Schrauben 11 der Sägetisch 8 befestigt ist.

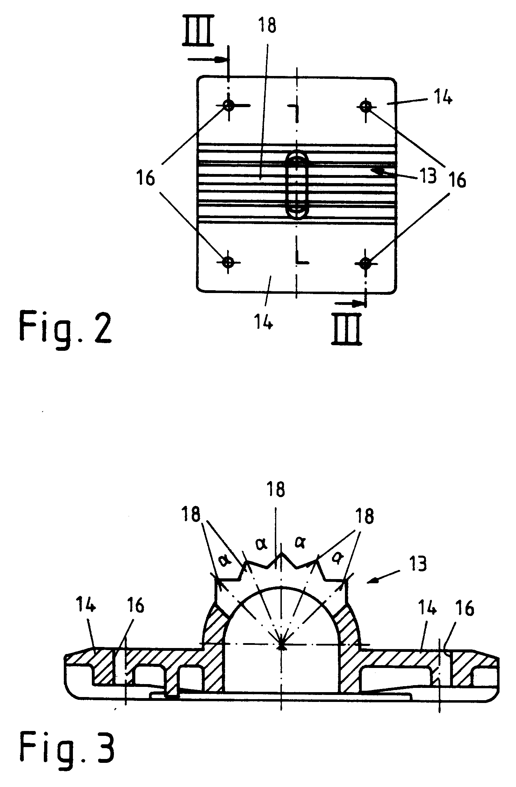

Wie insbesondere aus Fig. 2 und Fig. 3 hervorgeht, weist das erste Befestigungsteil 10 eine halbzylindrisch ausgebildete, außenverzahnte Oberfläche 13 auf, welche beidseits von plattenförmigen, einstückig mit der außenverzahnten Oberfläche 13 verbundenen, ebenen Vorsprüngen 14 umgeben ist. In den Vorsprüngen sind zur Befestigung des Sägetisches 8 mittels der Schrauben 11 Bohrungen 16 vorgesehen.

Die an der halbzylinderförmigen außenverzahnten Oberfläche 13 angeformten Zähne 18 haben ein Profil, das im Schnitt die Gestalt eines gleichschenkligen Dreiecks aufweist (siehe Fig. 3). Hierbei sind jeweils zwei Zähne 18 um einen Winkel α versetzt zueinander angeordnet, der dem kleinstmöglichen Schwenkwinkel des Sägetisches 8 entspricht.

Am Gehäuse 1 ist ein zu dem ersten Befestigungsteil komplementär ausgebildetes, zweites Befestigungsteil 20 angeordnet, welches im wesentlichen die Gestalt einer halbzylinderförmig ausgebildeten, innenverzahnten Oberfläche aufweist. Die Innenverzahnung des zweiten Befestigungsteils 20 ist hierbei so ausgeführt, daß die Außenverzahnung des ersten Befestigungsteils 10 kraft- und formschlüssig in sie eingreift. Aus diesem Grunde weisen die Zähne der Innenverzahnung im Schnitt ebenfalls die Gestalt eines gleichschenkligen Dreiecks auf, wobei zwei benachbarte Zähne auch um einen Winkel α zueinander versetzt sind, der dem kleinstmöglichen Schwenkwinkel des Sägetisches an der Stichsäge entspricht. Hierbei braucht die Verzahnung des zweiten Befestigungsteils 20 nicht über die gesamte Oberfläche ausgeführt zu sein, sondern kann lediglich dort vorhanden sein, wo bei unterschiedlich geschwenkten Anordnungen des Sägetisches die Auflagekraft, welche von der Stichsäge auf den Sägetisch im verschwenkten Zustand ausgeübt wird, tatsächlich angreift. Des weiteren ist es möglich, daß das zweite Befestigungsteil 20 nicht als separates Teil ausgeführt ist, sondern ein integraler Bestandteil des Gehäuses 1 ist.

Die beiden Befestigungsteile 10, 20 sind mit einer manuell betätigbaren, an dem Stichsägengehäuse 1 angeordneten, mit einem Spannrad 22 versehenen Schraube 23 miteinander verbunden. Hierzu ist in einem dritten, in dem ersten Befestigungsteil 10 form- und kraftschlüssig angeordneten Befestigungsteil 30 eine Ausnehmung zur drehfesten Lagerung einer Mutter 24 vorgesehen, in welche das Gewinde der Schraube 23 eingreift.

Zur Befestigung des Sägetisches 8 an dem Gehäuse 1 der Stichsäge dreht eine Bedienungsperson an dem drehfest mit der Schraube 23 verbundenen Spannrad 22, wodurch das erste Befestigungsteil 10 zusammen mit dem an ihm befestigten Sägetisch 8 in das zweite Befestigungsteil 20 hineingezogen und aufgrund der dreiecksförmig ausgebildeten Verzahnungen des ersten und zweiten Befestigungsteils (10, 20) zentriert und fixiert wird.

Zur Verschwenkung des Sägetisches 8 an dem Gehäuse 1 der Stichsäge wird durch Drehen an dem Spannrad 22 die Befestigung so lange gelockert, bis kein Eingriff der Verzahnungen mehr vorhanden ist, daraufhin wird der Sägetisch 8 zusammen mit dem ersten Befestigungsteil 10 um einen gewünschten Winkel, der ein ganzzahliges Vielfaches des Winkels α ist, verschwenkt, und im verschwenkten Zustand auf die oben beschriebene Weise wieder am Gehäuse 1 der Stichsäge fixiert und arretiert.

Hierbei erweisen sich die dreiecksförmigen Zähne 18 des ersten Befestigungsteils 10 und des zweiten Befestigungsteils 20 als besonders vorteilhaft, da durch sie einerseits eine Zentrierung bei der Befestigung ermöglicht wird, andererseits bieten sie eine große Oberfläche und damit eine große Übertragungsfläche für die Kraft, welche die Stichsäge (im verschwenkten Zustand) auf den Sägetisch ausübt. Dabei übernehmen die beiden Flanken der dreiecksförmigen Zähne 18 jeweils wechselseitig die Funktion einer Zentrierungsfläche und einer Fläche zur Aufnahme des Kippmoments, d.h. die Funktion eines Gegenlagers.

Um die Vorrichtung 6 zur schwenkbaren Befestigung eines Sägetisches 8 an dem Gehäuse 1 einer Stichsäge möglichst leicht und trotzdem stabil auszugestalten, sind das erste Befestigungsteil 10 sowie das dritte Befestigungsteil 30 als Kunststoffspritzteile ausgebildet. Das zweite Befestigungsteil 20, das vorteilhafterweise Bestandteil des Gehäuses 1 ist, ist ebenfalls als Kunststoff-Spritzteil ausgebildet. Diese Kunststoffspritzteile bieten neben einem geringen Gewicht den Vorteil, daß sie sehr stabil sind.

## Patentansprüche

1. Vorrichtung zur schwenkbaren Befestigung eines Sägetisches (8) an dem Gehäuse (1) einer Stichsäge mit einem an dem Sägetisch (8) angeordneten ersten Befestigungsteil (10) mit einer im wesentlichen halbzylindrisch ausgebildeten, Oberfläche, mit einem an dem Gehäuse (1) der Stichsäge angeordneten, zu dem ersten Befestigungsteil (10) passenden zweiten Befestigungsteil mit einer im wesentlichen halbzylindrisch ausgebildeten, Oberfläche (20) und mit einem Verbindungsmittel (23) zur lösbaren Verbindung des ersten Befestigungsteils (10) mit dem zweiten Befestigungsteil (20), dadurch gekennzeichnet, daß das erste Befestigungsteil (10) eine außenverzahnte Oberfläche (13) aufweist, daß das zweite Befestigungsteil (20) eine komplementär zu dem ersten Befestigungsteil (10) ausgebildete, innenverzahnte Oberfläche aufweist, und daß das Verbindungsmittel (23) eine mit einem manuell betätigbaren, an dem Gehäuse (1) der Stichsäge angeordneten Spannrad (22) versehene, mit dem ersten Befestigungsteil (10) verbundene Schraube (23) ist.

2. Vorrichtung nach Anspruch 1, dadurch gekennzeichnet, daß das zweite Befestigungsteil (20) ein Bestandteil des Gehäuses (1) ist.

3. Vorrichtung nach Anspruch 1 oder 2, dadurch gekennzeichnet, daß die Zähne (18) des ersten (10) und zweiten (20) Befestigungsteils im Schnitt dreiecksförmig ausgebildet sind.

4. Vorrichtung nach Anspruch 3, dadurch gekennzeichnet, daß die Zähne (18) im Schnitt die Gestalt eines gleichschenkligen Dreiecks aufweisen.

5. Vorrichtung nach Anspruch 4, dadurch gekennzeichnet, daß jeweils zwei benachbarte Zähne (18) um einen Winkel (α) versetzt zueinander angeordnet sind, der dem kleinstmöglichen Schwenkwinkel des Sägetisches (8) entspricht.

6. Vorrichtung nach einem der vorstehenden Ansprüche, dadurch gekennzeichnet, daß das zweite Befestigungsteil (20) eine nur teilweise innenverzahnte Oberfläche aufweist.

7. Vorrichtung nach einem der vorstehenden Ansprüche, dadurch gekennzeichnet, daß das erste Befestigungsteil (10) und das zweite Befestigungsteil (20) Kunststoffspritzteile sind.

8. Vorrichtung nach einem der vorstehenden Ansprüche, dadurch gekennzeichnet, daß an dem ersten Befestigungsteil zu beiden Seiten der halbzylindrisch ausgebildeten, außenverzahnten Oberfläche plattenförmige Vorsprünge (14) angeordnet sind, in welchen Öffnungen (16) zur Aufnahme von Verbindungsmitteln zur Verbindung des Sägetisches (8) mit dem ersten Befestigungsteil (10) angeordnet sind.

## Claims

1. A device for pivotably securing a sawing table (8) to the housing (1) of a jigsaw, having a first securing part (10) which is arranged on the sawing table (8) and which has a substantially semi-cylindrical surface, having a second securing part (20) which is arranged on the housing (1) of the jigsaw, matches the first securing part (10) and has a substantially semi-cylindrical surface, and having a connecting means (23) for detachably connecting the first securing part (10) to the second securing part (20), characterised in that the first securing part (10) has an external-toothed surface (13), in that the second securing part (20) has an internal-toothed surface complementary to the first securing part (10), and in that the connecting means (23) is a screw (23) which is connected to the first securing part (10) and which is provided with a tightening wheel (22) which is arranged on the housing (1) of the jigsaw and which is manually actuatable.

2. A device in accordance with Claim 1, characterised in that the second securing part (20) is a constituent part of the housing (1).

3. A device in accordance with Claim 1 or 2, characterised in that the teeth (18) of the first (10) and second (20) securing parts are triangular in section.

4. A device in accordance with Claim 3, characterised in that the teeth (18) have the form of an isosceles triangle in section.

5. A device in accordance with Claim 4, characterised in that in each case two adjacent teeth (18) are arranged displaced in relation to one another by an angle (α) corresponding to the smallest possible angle of pivot of the sawing table (8).

6. A device in accordance with any one of the preceding Claims, characterised in that the surface of the second securing part (20) is only partially internal-toothed.

7. A device in accordance with any one of the preceding Claims, characterised in that the first securing part (10) and the second securing part (20) are plastics injection-moulded parts.

8. A device in accordance with any one of the preceding Claims, characterised in that plate-shaped projections (14) are arranged on the first securing part so as to be to either side of the external-toothed semi-cylindrical surface, openings (16) for receiving connecting means to connect the sawing table (8) to the first securing part (10) being arranged in these projections (14).

## Revendications

1. Dispositif pour assurer une fixation avec pivotement d'une plaque de base (8) sur le carter (1) d'une scie sauteuse, avec une première partie de fixation (10) disposée sur la plaque de base (8) et à surface sensiblement semi-cylindrique, avec une deuxième partie de fixation (20), disposée sur le carter (1) de la scie sauteuse et s'adaptant à la première partie de fixation (10) et à surface sensiblement semi-cylindrique, et avec des moyens de liaison (23) destinés à relier de façon amovible la première partie de fixation (10) à la deuxième partie de fixation (20),
caractérisé en ce que
• la première fixation (10) présente une surface (13) dotée d'une denture extérieure,
• la deuxième partie de fixation (20) présente une surface à denture intérieure qui est complémentaire de la première partie de fixation (10), et
• les moyens de liaison (23) sont une vis (23) reliée à la première partie de fixation (10), dotée d'une roue de serrage (22), actionnable manuellement, disposée sur le carter (1) de la scie sauteuse.

2. Dispositif selon la revendication 1,
caractérisé en ce que
la deuxième partie de fixation (20) est une partie constitutive de carter (1).

3. Dispositif selon la revendication 1 ou 2,
caractérisé en ce que
les dents (18) de la première (10) et de la deuxième (20) parties de fixation ont une forme triangulaire, observée en coupe.

4. Dispositif selon la revendication 3,
caractérisé en ce que
les dents (18) présentent en coupe la forme d'un triangle équilatéral.

5. Dispositif selon la revendication 4,
caractérisé en ce que
chaque fois deux dents (18) voisines sont décalées l'une par rapport à l'autre d'un angle (α) qui correspond à l'angle de pivotement minimal possible de la plaque de base (8).

6. Dispositif selon l'une des revendications précédentes,
caractérisé en ce que
le deuxième dispositif de fixation (20) présente une surface qui n'est dotée que partiellement d'une denture intérieure.

7. Dispositif selon l'une des revendications précédentes,
caractérisé en ce que
la première partie de fixation (10) et la deuxième partie de fixation (20) sont des pièces moulées en matière plastique.

8. Dispositif selon l'une des revendications précédentes,
caractérisé en ce que
sur la première partie de fixation, des deux côtés de la surface semi-cylindrique à denture extérieure, sont disposées des saillies (14) en forme de plaques, dans lesquelles sont ménagées des ouvertures (16) destinées à recevoir des moyens de liaison pour relier la plaque de base (8) à la première partie de fixation (10).
